# EUROPÄISCHE PATENTANMELDUNG

(11) **EP 1 126 190 A2**
(43) Veröffentlichungstag der Anmeldung: **22.08.2001**
(21) Anmeldenummer: 01101902.3
(22) Anmeldetag: 27.01.2001
(51) Int. Cl.: F16D 55/22

(54) **Teilbelag-Scheibenbremse für einen Personenkraftwagen**

(30) Priorität: 14.02.2000 DE 10006464
(71) Anmelder: Bayerische Motoren Werke Aktiengesellschaft, 80809 München (DE)
(72) Erfinder: Cordes, Wilhelm, 85716 Unterschleissheim (DE)

(57) **Zusammenfassung**

Die Erfindung betrifft eine Teilbelag-Scheibenbremse für die Vorderachse eines Personenkraftwagens, der auch an der Hinterachse mit einer Teilbelag-Scheibenbremse der Sattelbauart ausgestattet ist. Erfindungsgemäß sind an den Vorderachs-Bremsscheiben jeweils zumindest zwei Bremssättel (2), die im wesentlichen baugleich mit denjenigen der Hinterachs-Bremsscheiben sind, vorgesehen. Dabei können die einer Vorderachs-Bremsscheibe zugeordneten Bremssättel (2) in Bremsscheiben-Umfangsrichtung (1) betrachtet im wesentlichen nebeneinander in einem gemeinsamen Halter (3) befestigt sein und durchaus unterschiedlich dimensionierte Bremskolben aufweisen.

## Beschreibung

Die Erfindung betrifft eine Teilbelag-Scheibenbremse für die Vorderachse eines Personenkraftwagens, der auch an der Hinterachse mit einer Teilbelag-Scheibenbremse der Sattelbauart ausgestattet ist. Zum technischen Umfeld wird beispielshalber auf die DE 39 38 979 A1 verwiesen.

Bei den heute üblichen Teilbelag-Scheibenbremsen für Personenkraftwagen wird die Bremskraft in einem sog. Bremssattel erzeugt und auf die mit der Fahrzeug-Raddrehzahl rotierende Bremsscheibe aufgebracht, an welcher sich dann zusammen mit dem wirksamen Reibradius das wirksame Bremsmoment ergibt. Hinsichtlich der Bremssättel unterscheidet man zwischen der Festsattel-Bauart und der Faustsattel-Bauart, wobei in unterschiedlichen Bremssätteln auch eine unterschiedliche Anzahl von die Bremskraft auf die Bremsscheibe aufbringenden Bremskolben vorgesehen sein können.

Es ist erwünscht, möglichst hohe Bremskräfte auf die Bremsscheiben eines Personenkraftwagens aufbringen zu können. Damit werden die Bremssättel in zunehmendem Maße mechanisch höher belastet. Insbesondere an Personenkraftwagen ist dabei der zur Verfügung stehende Bauraum relativ beengt, so daß ein Bremssattel einer PKW-Teilbelag-Scheibenbremse auch nicht beliebig größer dimensioniert werden kann.

Grundsätzlich könnten zur Erzeugung höherer Bremskräfte auch zwei parallel zueinander angeordnete Bremsscheiben je Fahrzeugrad vorgesehen werden, so wie dies bspw. in der o.g. DE 39 38 979 A1 gezeigt ist, jedoch stellen sich auch hier wieder Bauraumprobleme ein. Ferner erhöhen die zusätzlichen Bremsscheiben unerwünschterweise die rotierende Masse je Fahrzeugrad.

Mit der vorliegenden Erfindung soll deshalb eine Maßnahme aufgezeigt werden, mit Hilfe derer an einer Teilbelag-Scheibenbremse nach dem Oberbegriff des Anspruchs 1 auf relativ einfache und wirtschaftliche Weise die auf die Vorderachs-Bremsscheibe aufbringbare Bremskraft deutlich erhöht werden kann, ohne damit einen wesentlich größeren Bauraum zu benötigen (=Aufgabe der vorliegenden Erfindung).
Die Lösung dieser Aufgabe ist dadurch gekennzeichnet, daß an den Vorderachs-Bremsscheiben jeweils zumindest zwei Bremssättel, die im wesentlichen baugleich mit denjenigen der Hinterachs-Bremsscheiben sind, vorgesehen sind. Vorteilhafte Aus- und Weiterbildungen sind Inhalt der Unteransprüche.

Ausgehend von der Erkenntnis, daß bei heutigen Personenkraftwagen eine Bremskraftverteilung zwischen der Vorderachse und der Hinterachse im Verhältnis 2:1 (zumindest gilt dies grob betrachtet) üblich ist, wird vorgeschlagen, den sog. Hinterachs-Bremssattel auch an einer Vorderachs-Bremsscheibe vorzusehen, jedoch zumindest zweifach, wobei die beiden (oder mehreren) Bremssättel dann bevorzugt in Umfangsrichtung der Vorderachs-Bremsscheibe betrachtet nebeneinander angeordnet sind. Äußerst einfach läßt sich damit bei vorteilhafter Gleichteile-Verwendung an der PKW-Vorderachse eine gegenüber der PKW-Hinterachse (wie gewünscht) doppelte Bremskraft erzeugen.

Bei konsequenter Umsetzung des Gleichteileprinzips können somit an einem erfindungsgemäßen Personenkraftwagen insgesamt sechs gleiche Bremsfäuste, sechs gleiche Haltefedern, (nämlich jeweils vier für die Vorderachse und zwei für die Hinterachse) sowie zwölf gleiche Bremsbeläge zum Einsatz kommen. Zur Anpassung der Bremskraft-Verhältnisse können jedoch durchaus in den einzelnen Bremssätteln unterschiedlich dimensionierte Bremskolben vorgesehen sein. Dabei können vorteilhafterweise bei einer erfindungsgemäßen Vorderachs-Scheibenbremse die Bremskolben mit einem kleineren Durchmesser ausgebildet werden als bei einer einfachen Teilbelag-Scheibenbremse mit einem einzigen Bremssattel, so daß als Folge hiervon zusammen mit einer auch schwächer dimensionierbaren bzw. dimensionierten Bremsfaust bei im wesentlichen gleichem Bauraum ein größerer Reibradius auf der Bremsscheibe erzielt werden kann, was einem höheren erzielbaren Bremsmoment entspricht.

Die einer Vorderachs-Bremsscheibe zugeordneten und in Bremsscheiben-Umfangsrichtung betrachtet im wesentlichen nebeneinander angeordneten Bremssättel können in einem gemeinsamen Halter befestigt sein, wie auch das in der beigefügten einzigen **Figur** dargestellte bevorzugte Ausführungsbeispiel der Erfindung zeigt, alternativ kann jedoch auch jeder Bremssattel für sich einzeln aufgehängt sein.

Mit der Bezugsziffer 1 ist der nur teilweise dargestellte Außenumfang einer ansonsten nicht weiter gezeigten Bremsscheibe einer PKW-Vorderachse in Seitenansicht bezeichnet, von welcher noch der Mittelpunkt M eingezeichnet ist. Am Außenumfang 1 der Bremsscheibe sind in Umfangsrichtung betrachtet im wesentlichen nebeneinander zwei Bremssättel 2 in einem gemeinsamen Halter 3 angeordnet. In sich sind diese Bremssättel 2 (hier nach der Faustsattel-Bauart) wie üblich aufgebaut, so daß hierauf nicht näher eingegangen wird. Alleine durch die gezeigte Anordnung dieser beiden Bremssättel 2, die einzeln auch an der (nicht dargestellten) HinterachsBremsscheibe des Personenkraftwagens vorgesehen sind, werden die weiter oben beschriebenen Vorteile erzielt, wobei noch darauf hingewiesen sei, daß selbstverständlich eine Vielzahl weiterer Details insbesondere konstruktiver Art durchaus abweichend vom gezeigten Ausführungsbeispiel gestaltet sein kann, ohne den Inhalt der Patentansprüche zu verlassen.

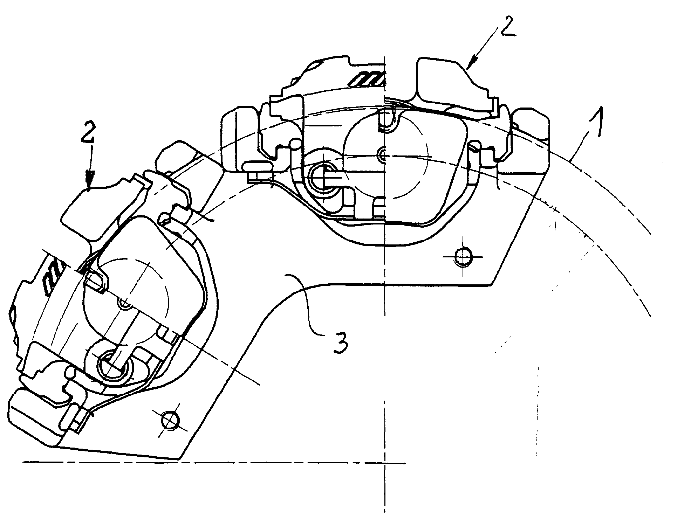

## Patentansprüche

1. Teilbelag-Scheibenbremse für die Vorderachse eines Personenkraftwagens, der auch an der Hinterachse mit einer Teilbelag-Scheibenbremse der Sattelbauart ausgestattet ist,
dadurch gekennzeichnet, daß an den Vorderachs-Bremsscheiben jeweils zumindest zwei Bremssättel (2), die im wesentlichen baugleich mit denjenigen der Hinterachs-Bremsscheiben sind, vorgesehen sind.

2. Teilbelag-Scheibenbremse nach Anspruch 1,
dadurch gekennzeichnet, daß die einer Vorderachs-Bremsscheibe zugeordneten Bremssättel (2) in Bremsscheiben-Umfangsrichtung betrachtet im wesentlichen nebeneinander in einem gemeinsamen Halter (3) befestigt sind.

3. Teilbelag-Scheibenbremse nach Anspruch 1 oder 2,
dadurch gekennzeichnet, daß in den Bremssätteln (2) unterschiedlich dimensionierte Bremskolben vorgesehen sind.
